# EUROPEAN PATENT SPECIFICATION

(11) **EP 3 214 818 B1**
(45) Date of publication and mention of the grant of the patent: **22.08.2018**
(21) Application number: 16158334.9
(22) Date of filing: 02.03.2016
(51) Int. Cl.: H04L 29/06

(54) **METHOD FOR AN ENHANCED MONITORING AND/OR SYNCHRONIZATION BETWEEN NETWORK NODES OF AN IP MULTIMEDIA SUBSYSTEM NETWORK, TELECOMMUNICATIONS NETWORK, SYSTEM, PROGRAM AND COMPUTER PROGRAM PRODUCT**
VERFAHREN FÜR EINE VERBESSERTE ÜBERWACHUNG UND/ODER SYNCHRONISIERUNG ZWISCHEN NETZKNOTEN EINES IP-MULTIMEDIA-NETZWERKS, TELEKOMMUNIKATIONSNETZWERK, SYSTEM, PROGRAMM UND COMPUTERPROGRAMMPRODUKT
PROCÉDÉ POUR UNE SURVEILLANCE AMÉLIORÉE ET/OU UNE SYNCHRONISATION ENTRE DES NOEUDS DE RÉSEAU D'UN RÉSEAU DE SOUS-SYSTÈME MULTIMÉDIA IP, RÉSEAU DE TÉLÉCOMMUNICATIONS, SYSTÈME, PROGRAMME INFORMATIQUE ET PRODUIT LOGICIEL

(43) Date of publication of application: 06.09.2017
(73) Proprietor: Deutsche Telekom AG, 53113 Bonn (DE)
(72) Inventor: DENNERT, Thomas, 53844 Troisdorf (DE)
(74) Representative: Schwöbel, Thilo K.

(56) References cited:
- EP-A1- 2 139 195
- NORTEL: "Clarifications to Operational Efficient Allocation of Users to Application Servers in TR 23.818", 3GPP DRAFT; S2-062241, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Lisbon; 20060620, 20 June 2006 (2006-06-20), XP050256316, [retrieved on 2006-06-20]
- "3rd Generation Partnership Project; Technical Specification Group Services and Architecture; Optimisations and Enhancements for Realtime IMS communication (Release 7)", 3GPP STANDARD; 3GPP TR 23.818, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.10.0, 1 February 2007 (2007-02-01), pages 1-70, XP050363838,

## Description

### BACKGROUND

The present invention relates a method for an enhanced monitoring and/or synchronization between network nodes of a telecommunications network realizing an IP Multimedia Subsystem network and serving a user of the telecommunications network, wherein the telecommunications network comprises a plurality of application server nodes for providing an IMS application server functionality, and at least one control function node for providing an IMS control function functionality, wherein the plurality of application server nodes comprises at least a first application server node and a second application server node.

Furthermore, the present invention relates to a telecommunications network for an enhanced monitoring and/or synchronization between network nodes of a telecommunications network realizing an IP Multimedia Subsystem network and serving a user of the telecommunications network, wherein the telecommunications network comprises a plurality of application server nodes for providing an IMS application server functionality, and at least one control function node for providing an IMS control function functionality, wherein the plurality of application server nodes comprises at least a first application server node and a second application server node.

Additionally, the present invention relates to a system for an enhanced monitoring and/or synchronization between network nodes of a telecommunications network realizing an IP Multimedia Subsystem network and serving a user of the telecommunications network, wherein the telecommunications network comprises a plurality of application server nodes for providing an IMS application server functionality, and at least one control function node for providing an IMS control function functionality, wherein the plurality of application server nodes comprises at least a first application server node and a second application server node.

Furthermore, the present invention relates to a program and a computer program product for an enhanced monitoring and/or synchronization between network nodes of a telecommunications network realizing an IP Multimedia Subsystem network.

The exchange of packetized information in broadband communication systems or telecommunications networks, both in fixed-line as in wireless communication systems has already grown dramatically and probably will also grow in the future due to the rapid spread of different data services in such communication networks.

IP Multimedia (IPMM) services provide a dynamic combination of voice, video, messaging, data, etc. within the same communication session. By growing the numbers of basic applications and the media which it is possible to combine, the number of services offered to the end users will grow. This will lead to a new generation of multimedia communication services, including so-called "combinational IP Multimedia" services. IP Multimedia Subsystem (IMS) is the technology defined by the Third Generation Partnership Project (3GPP) to provide IP Multimedia services over mobile communication networks. IMS provides key features to enrich the end-user person-to-person communication experience through the integration and interaction of services. IMS allows new rich person-to-person (client-to-client) as well as person-to-content (client-to-server) communications over an IP-based network. The IMS makes use of the Session Initiation Protocol (SIP) to set up and control calls or sessions between user terminals (or user terminals and application servers). In this regard, 3GPP document "Clarifications to "Operational Efficient Allocation of Users to Application Servers" in TR 23.818", 3GPP DRAFT; S2-0262241, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG2, no. Lisbon; 20060620, 20 June 2006 (2006-06-20), XP050256316 describes the issue of how application servers are dynamically allocated to subscribers for a specific set of services.

An IMS application server instance (or application server node) that requires the IMS registration profile - typically maintained by a control function node (such as an S-CSCF instance, i.e. a network node and/or an instance providing the functionality of a serving call session control function) serving a registered user - might retrieve the (registration) profile, hence registration profile data, upon any initial request for a session or stand-alone transaction. This is a very inefficient method. Therefore it applies procedures (3^{rd} Party Registration as defined by 3GPP) to receive the profile (or registration profile data) only in case of an initial registration procedure, and upon any change of the registration profile - which might, e.g., occur due to the initial registration of further clients of a user, or due to re- or de- registration of clients assigned to the user. This proceeding reduces signaling load between the corresponding control function node (such as an S-CSCF, i.e. a serving call session control function) and the application server node or application server instance. However, this requires that during the lifetime of a user's registration, any traffic for the user is invoked via the same application server node or application server instance. But communication problems (e.g. lost messages, rejection due to overload) might force a control function node (or an S-CSCF instance) to use another application server node or application server instance (compared to the initially used (or original) application server node or application server instance) for at least some time. This different application server node (or application server instance) will retrieve the registration profile from the control function node (or S-CSCF instance) upon receipt of initial session request or stand-alone request for a user for which is has no registration data yet. This procedure is referred to as "recovery procedure". However, a recovery procedure is typically not applied in case that the initially used (or original) application server node is again able to provide the requested service to the user, typically leading to errors due to outdated registration data and/or status information within the initially used application server node or application server instance.

### SUMMARY

An object of the present invention is to provide a technically simple, effective and cost effective solution for an enhanced monitoring and/or synchronization between network nodes of a telecommunications network realizing an IP Multimedia Subsystem (IMS) network. A further object of the present invention is to provide a corresponding telecommunications network, and a corresponding system comprising a telecommunications network.

The object of the present invention is achieved by a method for an enhanced monitoring and/or synchronization between network nodes of a telecommunications network realizing an IP Multimedia Subsystem (IMS) network and serving a user of the telecommunications network, wherein the telecommunications network comprises a plurality of application server nodes for providing an IMS application server functionality, and at least one control function node for providing an IMS control function functionality, wherein the plurality of application server nodes comprises at least a first application server node and a second application server node, wherein the method comprises the following steps:
-- in a first step, the first application server node transmits a monitoring request message to the at least one control function node, the monitoring request message comprising an address information being related to the IMS application server functionality provided by the plurality of application server nodes,
-- in a second step, subsequent to the first step, the at least one control function node transmits a monitoring response message to a preferred destination network node of the plurality of application server nodes for providing the IMS application server functionality, the preferred destination network node being determined by the at least one control function node,
wherein the preferred destination network node corresponds to either the first application server node or to the second application server node based on whether the first application server node or the second application server node is preferred, by the at least one control function node, among the plurality of application server nodes regarding the IMS application server functionality.

It is thereby advantageously possible according to the present invention that an initial (or original) application server node (or application server instance) - having been involved in serving a user of the telecommunications network prior to a temporary communication link failure (or failure of the application server node) regarding the communication link with the corresponding control function node - is able to be aware of the communication link failure in case that the initial (or original) application server node (or application server instance) takes over serving the user from another application server node (having been involved in serving the user during the communication link failure or failure of the initial application server node).

According to the present invention, it is hence advantageously possible that an (IMS) application server node (or (IMS) application server instance) verifies, by means of transmitting the monitoring request message and receiving the monitoring response message, whether the communication link with another node of the telecommunications network - especially a control function node providing a control node functionality such as an S-CSCF - is still available. Especially, this communication link is verified by the application server node or application server instance by frequently sending (especially repeatedly or at least once during a predetermined time interval) the monitoring request messages and receiving the monitoring response messages, i.e. specific monitoring session requests, to itself via one or a plurality of control function nodes, especially all corresponding S-CSCF instances, that provided user registration data to the respective application server node (or application server instance), i.e. by means of the specific monitoring session requests (i.e. the monitoring request message and the monitoring response message), the application server nodes or application server instances check whether the communication to and/or from any control function nodes (such as S-CSCF instances) is still in service.

According to the conventionally implemented communication of application server nodes, an IMS application server instance (or application server node) that requires the IMS registration profile regarding a user does typically not retrieve the registration profile information upon any initial request for a session or stand-alone transaction, but only in case of an initial registration procedure or upon any change of the registration profile (e.g. due to the initial registration of further clients of a user or the like). While this conventionally applied proceeding reduces signaling load, it requires that during the involvement of an application server node regarding a user of the telecommunications network (i.e. during a user's registration), any traffic for that user is invoked via the same (or preferred) application server node or application server instance. If, in such a situation, the communication link between the respective control function node (or control function instance), on the one hand, and the application server node (or application server instance) initially or originally serving the user, on the other hand, is lost for whatever reason, and - after this communication link having been restored again - the initially used original application server node is to be used again for serving the respective user, then the initially used application server node will not be aware - at least not in the general case, and especially not in case that another or alternative application server node or application server instance (providing, together with the initially serving application server node, the same IMS application server functionality) has been involved in serving the user - about this temporary invocation of an alternative application server node or application server instance. Accordingly, the original application server node (or application server instance) will not apply a new recovery procedure, and, as a consequence, the subsequent traffic via this original application server node (or application server instance) might be based on outdated registration data and status information. Hence, the conventional 3^{rd} Party Registration approach as defined by 3GPP procedures does not provide a solution to guarantee an always up-to-date copy of the registration data within application server nodes or application server instances. For application server node or application server instances which provide MMTEL/SCC-AS functionality (multimedia telephony functionality and/or service centralization and continuity functionality) according to 3GPP standards, this problem might result in e.g. issues such as:
-- The SCC-AS instance assumes that the ATCF (Access Transfer Control Function) instance being used for SRVCC (single radio voice call continuity) is aware about the involved SCC-AS instance address from a notification towards ATCF in the course of a previous registration procedure (as defined by 3GPP standards), however, in the meantime, this information (regarding the involved SCC-AS instance address) might have been overwritten by an alternative SCC-AS instance, potentially resulting in failing further SRVCC invocations.
-- The registration status of all clients (e.g. for a Mobile Multi-SIM/Multi-Device logic) assigned to a user might not be known. If, e.g., the MMTEL logic needs to consider the status of multiple clients being assigned to a user (e.g. clients not registered for IMS MMTEL Service that, therefore, need to retrieve further status information from Mobile GSM Network) in order to decide which one of these clients shall be called in case of incoming call requests, this will not work correctly based on outdated registration data in the MMTEL AS Instance.

These drawbacks of conventional implementations are remedied according to the present invention by means of the application server nodes or application server instances using monitoring request messages and monitoring response messages in order to verify whether the communication link with another node of the telecommunications network - especially a control function node providing a control node functionality such as an S-CSCF - is still available. According to the present invention, this communication link is verified regularly, i.e. repeatedly or at least once during a predetermined time interval. Furthermore, this communication link is verified by means of involving the corresponding control function node such that the specific destination of the monitoring response message (especially to which application server node of a plurality of application server nodes providing, together, the same IMS application server functionality) is defined, not by the application server node transmitting the monitoring request message, but by the respective control function node by means of sending the monitoring response message to the preferred application server node (of the plurality of application server nodes providing the same IMS application server functionality). This is provided for by means of the monitoring request message (being transmitted by the application server node towards the corresponding control function node) comprising a generic address information being related to the IMS application server functionality provided by the plurality of application server nodes. This means that the address information of the monitoring request message is pointing to the sending (or transmitting) application server node only in case that this application server node is the preferred application server node (regarding the respective IMS application server functionality in question) from the perspective of the control function node, i.e. in case the transmitting application server node is the preferred application server node from the perspective of the control function node. Thereby, it is advantageously possible according to the present invention that the application server node (transmitting the monitoring request message) is able to check that it is (still) the preferred application server node (for the corresponding control function node).

Typically, in case of a failure regarding the communication link between a control function node and an application server node (or a failure or overload condition of the application server node itself), the corresponding control function node bars any communication towards the respective application server node during a specific time interval (hereinafter also called barring time interval), or during one of a plurality of different time intervals (hereinafter also called barring time intervals) depending on, e.g., the cause of the failure of the communication link and/or of the application server node.

According to the present invention, the frequency of the checks performed by an application server node - i.e. the application server node checking, by means of transmitting the monitoring request message, that it is (still) the preferred application server node for the corresponding control function node - ensures that there is at least one check within the specific time interval (or the minimum time interval in case of a plurality of different time intervals) which is applied by the control function node (e.g. an S-CSCF instance) to bar communication to the application server node (or application server instance) after a communication error occurred.

If an application server node (or an application server instance) gets aware - due to the failure of the monitoring request, i.e. the monitoring response message is not received (during a timeout time interval) after transmission of a monitoring request message - about such a communication outage (of the link between an S-CSCF to the given AS Instance), then any further initial request for a session or stand-alone transaction from this control function node (especially a S-CSCF instance) will result in the application server node (or instance) in a recovery of registration data, in case that valid (i.e. not expired) registration data exist that have been received, from the respective control function node, especially an S-CSCF instance, prior to the last communication error (and not been updated since then).

Hence, according to the present invention, it is preferred that a registration process related to the user involves the transmission of first registration profile data, related to the user, from the at least one control function node to the first application server node, wherein the method additionally comprises the steps of:
-- in a third step, prior to the first step, the first application server node receives initial or updated registration profile data from the at least one control function node,
-- in a fourth step, subsequent to the second step, - in case of the monitoring response message having not been transmitted to the first application server node (i.e. received by the first application server node) - the first application server node requests the transmission of second registration profile data, related to the user, from the at least one control function node, the second registration profile data corresponding to updated registration profile data related to the user.

Thereby, it is advantageously possible according to the present invention that the application server node (or application server instance) is aware about the failure of the communication link between the corresponding control function node and the respective application server node, and is able to update the registration profile data, i.e. transmit the second registration profile data related to the user, thereby updating the first registration profile data initially retrieved upon the registration process. It is furthermore preferred according to the present invention that the registration profile data retained within (or at least assigned to) the application server node comprise an update time information ("last update timestamp"). Hence the first registration profile data are related to an update time information indicating another point in time (in general an earlier point in time) than the update time information related to the second registration profile data (indicating typically a later point in time).

It is furthermore preferred according to the present invention that the first application server node requests the transmission of second registration profile data only after having received an information that a communication session is requested and/or initiated by the user (or in case that the (first) registration profile data need to be updated by the second registration profile data).

Thereby, it is advantageously possible according to the present invention that the application server node or application server instance needs to apply the recovery (of registration profile data, i.e. the updating of the first registration profile data by means of the second registration profile data) just for those users for which any new communication occurs in advance to the next regular re-registration or any new initial registration. Hence it is advantageously possible according to the present invention that an outage of a communication link does not result in significant load overhead proportional to the total number of users served by the given application server node (or application server instance) - especially an update of the respective (first) registration profile data (by means of the second registration profile data) is not required, for all users served by the application server node, immediately after re-establishment of the communication link between the corresponding control function node and the respective application server node. Thereby, it is advantageously possible according to the present invention that an important peak (at least a peak proportional to the total number of users served) of additional transmission capacity (and/or processing capacity, especially of the application server node) immediately after restoring the previously failed communication link can be avoided, and just some additional load for the users for which new communication occurs needs to be handled after restoring the previously failed communication link.

According to a further preferred embodiment of the present invention, - in case of the monitoring response message having been transmitted to the first application server node - the first registration profile data are regarded as appropriate (or up to date), and wherein - in case of the monitoring response message having not been transmitted to the first application server node - the first registration profile data are required to being updated.

Thereby, it is advantageously possible according to the present invention that the application server node is not only aware of an outage of the communication link towards the corresponding control function node, but is also able to appropriately react after such an outage (by means of updating the respective registration profile data of users concerned) while still avoiding in creating an important peak in registration profile data to be exchanged between the corresponding control function node and the respective application server node within a comparatively short time interval (especially after restoration of the previously failed communication link).

According to a further preferred embodiment of the present invention, the preferred destination network node is determined by the at least one control function node, based on the address information being related to the IMS application server functionality provided by the plurality of application server nodes, wherein the address information preferably corresponds to at least one out of a public service identity profile information and a fully qualified domain name (FQDN) information,
wherein the public service identity profile information is especially related to the IMS application server functionality provided by the plurality of application server nodes, and/or
wherein the address information especially corresponds to the public service identity profile information from which the at least one control function node derives or determines the fully qualified domain name (FQDN) information related to the IMS application server functionality provided by the plurality of application server nodes, the preferred destination network node especially being determined - especially by means of a domain name system (DNS) request performed by the at least one ccontrol function node(150) - by determining the internet protocol address (IP address) of the preferred destination network node.

Thereby, it is advantageously possible to implement that the monitoring request message (being transmitted by the application server node towards the corresponding control function node) comprises only a generic address information being related to the (IMS) application server functionality provided by the plurality of application server nodes (and not the specific application server node or application server instance transmitting the monitoring request message). This means that, while the address information of the monitoring request message is pointing, in principle, to the sending (or transmitting) application server node, it does this only in case that this application server node is the preferred application server node, regarding the respective IMS application server functionality in question, from the perspective of the control function node. The application server node (transmitting the monitoring request message) is hence able to check that it is (still) the preferred application server node for the corresponding control function node.

Furthermore, according to an embodiment of the present invention, it is preferred that the transmission of a monitoring request message of the first step and the transmission of the monitoring response message of the second step is repeated in a subsequent first step, involving the transmission of a subsequent monitoring request message, and in a subsequent second step, involving the transmission of a subsequent monitoring response message, wherein a repetition time interval corresponds to the time difference between the transmission of the monitoring request message and the subsequent monitoring request message, wherein the at least one control function node applies a barring time interval or a plurality of barring time intervals during which communication towards the first and/or the second application server node is at least partly barred in case of failure of the respective application server node, wherein the repetition time interval preferably corresponds to less than the barring time interval or less than the minimum of the plurality of barring time intervals, preferably less than half of the barring time interval or less than half of the minimum of the plurality of barring time intervals.

Thereby, it is advantageously possible according to the present invention that, in case of a communication link failure (and hence in case of the monitoring response message having not been transmitted to (or received by) the first application server node (from the corresponding control function node)), the application server node retains a synchronization error time information (such as "last sync error timestamp") related to the corresponding control function node. As the registration profile data retained within (or at least assigned to) the application server node comprise an update time information ("last update timestamp"), it is possible, for the application server node, to compare the update time information with the synchronization error time information, and to differentiate the users (and the related registration profile data) being related an update time information having a value prior to the synchronization error time information from those users (and the related registration profile data) bearing an update time information subsequent to the synchronization error time information: An update of the corresponding (first) registration profile data (by means of second registration profile data) is required only for the former group of the users/registration profile data.

Furthermore, it is preferred according to the present invention that the monitoring request message corresponds to a request of the form used for a new communication session, wherein the monitoring request message especially comprises a P-Asserted-Identity header such that the P-Asserted-Identity header is set to an identity assigned to the first application server node and/or wherein the monitoring request message especially comprises a specific public service identity information, the specific public service identity information being specific to the first application server node.

Additionally, it is preferred according to the present invention that the monitoring request message and the monitoring response message are IMS service control messages.

Furthermore, the present invention relates to a telecommunications network for an enhanced monitoring and/or synchronization between network nodes of the telecommunications network, the telecommunications network realizing an IP Multimedia Subsystem (IMS) network and serving a user of the telecommunications network, wherein the telecommunications network comprises a plurality of application server nodes for providing an IMS application server functionality, and at least one control function node for providing an IMS control function functionality, wherein the plurality of application server nodes comprises at least a first application server node and a second application server node, wherein the telecommunications network is configured such that:
-- a monitoring request message is transmitted, by the first application server node, to the at least one control function node, the monitoring request message comprising an address information being related to the IMS application server functionality provide by the plurality of application server nodes,
-- a monitoring response message is transmitted, by the at least one control function node, to a preferred destination network node of the plurality of application server nodes for providing the IMS application server functionality, the preferred destination network node being determined by the at least one control function node,
wherein the preferred destination network node corresponds either to the first application server node or to the second application server node based on whether the first application server node or the second application server node is preferred, by the at least one control function node, among the plurality of application server nodes regarding the IMS application server functionality.

Additionally, the present invention relates to a system for an enhanced monitoring and/or synchronization between network nodes of the telecommunications network, the telecommunications network realizing an IP Multimedia Subsystem (IMS) network and serving a user of the telecommunications network, wherein the system comprises the telecommunications network and a plurality of application server nodes for providing an IMS application server functionality, wherein the telecommunications network comprises at least one control function node for providing an IMS control function functionality, wherein the plurality of application server nodes comprises at least a first application server node and a second application server node, wherein the system is configured such that:
-- a monitoring request message is transmitted, by the first application server node, to the at least one control function node, the monitoring request message comprising an address information being related to the IMS application server functionality provided by the plurality of application server nodes,
-- a monitoring response message is transmitted, by the at least one control function node, to a preferred destination network node of the plurality of application server nodes for providing the IMS application server functionality, the preferred destination network node being determined by the at least one control function node,
wherein the preferred destination network node corresponds either to the first application server node or to the second application server node based on whether the first application server node or the second application server node is preferred, by the at least one control function node, among the plurality of application server nodes regarding the IMS application server functionality.

According to the present invention - and especially with regard to the telecommunications network and/or the system but not limited thereto-, it is advantageously possible to provide an application server node with additional pieces of information - especially regarding previous situations of failure of communication links involving that considered application server node - such that - after restoration of the failure - communication services towards user can be provided in a more reliable manner and without causing a substantially increased transmission of overhead signaling messages between the network nodes involved.

According to the present invention - and especially with regard to the telecommunications network and/or the system but not limited thereto-, it is furthermore preferred that a registration process related to the user involves the transmission of first registration profile data, related to the user, from the at least one control function node to the first application server node, wherein the telecommunications network or the system is configured such that:
-- initial or updated registration profile data are received, by the first application server node, from the at least one control function node,
-- in case of the monitoring response message having been transmitted to the first application server node, the first registration profile data are regarded as appropriate, and in case of the monitoring response message having not been transmitted to the first application server node, second registration profile data, related to the user, are requested, by the first application server node, from the at least one control function node, the second registration profile data corresponding to updated registration profile data related to the user, wherein preferably the transmission of second registration profile data are requested, by the first application server node, only after having received an information that a communication session is requested and/or initiated by the user.

Still additionally, the present invention relates to a program comprising a computer readable program code which, when executed in part on a plurality of application server nodes and in part on a control function node of a telecommunications network, causes the plurality of application server nodes and the control function node to perform the inventive method.

Furthermore, the present invention relates to a computer readable medium for an enhanced monitoring and/or synchronization between network nodes of a telecommunications network realizing an IP Multimedia Subsystem network, the computer readable medium comprising a computer program, the computer program comprising program code which, when executed in part on a plurality of application server nodes and in part on a control function node of a telecommunications network, causes the plurality of application server nodes and the control function node to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a mobile communication network as an example of an inventive telecommunications network comprising an access network and a core network.
Figure 2 schematically illustrates, besides a user or a user equipment, a core network of an inventive telecommunications network comprising a control function node, and a plurality of application server nodes for providing an IMS application server functionality.
Figure 3 and 4 schematically show communication diagrams between, inter alia the user or user equipment, the control function node, a first application server node, and a second application server node.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

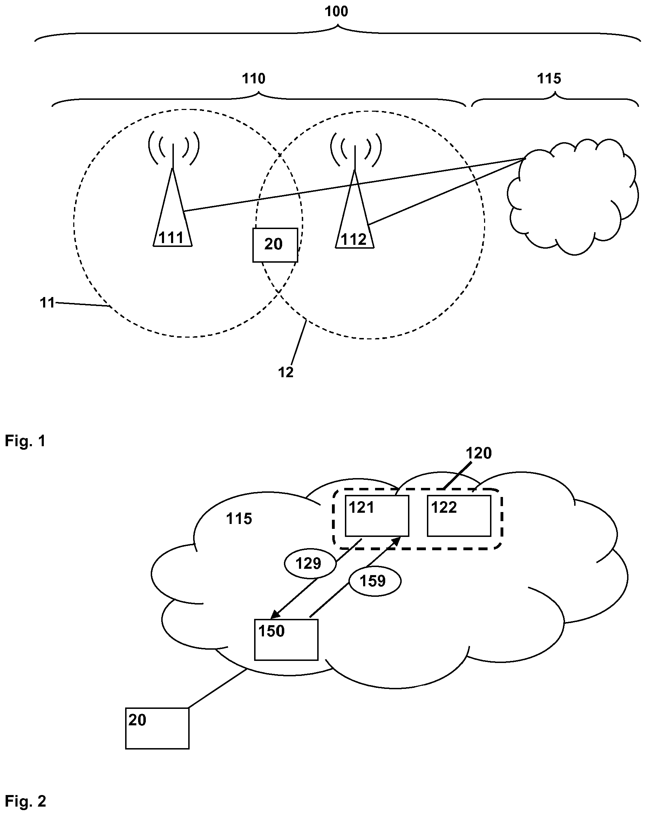

In Figure 1, a mobile communication network, especially a public land mobile network, is schematically shown as an example of an inventive telecommunications network 100, realizing an IP Multimedia Subsystem (IMS) network. The telecommunications network 100 comprises an access network 110 and a core network 115. The core network 115 is only schematically shown by means of a cloud representation. The telecommunications network 100 is preferably a cellular telecommunications network 100 comprising typically a plurality of network cells or radio cells, two of which are represented in Figure 1 by means of a dashed line and reference signs 11 (first radio cell) and 12 (second radio cell). In the telecommunications network 100, typically a plurality of user equipments 20 or users 20 are camping on the telecommunications network 100 within network cells 11, 12, i.e. the user equipments are connected to or are camping on a first base station entity 111, the first base station entity 111 serving the first radio cell 11, or on a second base station entity 112, the second base station entity 112 serving the second radio cell 12. The first and second gateway entities 111, 112 are typically base station entities, typically base transceiver stations, e.g. eNodeBs.

In Figure 2, besides a user 20 or a user equipment 20, the core network 115 of an inventive telecommunications network 100 is schematically represented, the core network 115 comprising a control function node 150, providing an (IMS) control function functionality, and a plurality of application server nodes 120 for providing an (IMS) application server functionality to the user 20 (or user equipment 20). The plurality of application server nodes 120 comprises a first application server node 121, and a second application server node 122, the first and second application server nodes 121, 122 being only representatives of further application server nodes (not represented in Figure 2) as part of the plurality of application server nodes 120. Especially, the first and/or second application server nodes 121, 122 are implemented or realized, according to an embodiment, as (individual) physical machines, i.e. computer nodes or network nodes. Alternatively, the first and/or second application server nodes 121, 122 are implemented or realized as virtual machines running on a physical hardware (or on a plurality of physical hardware nodes). In the context of the present invention, it is referred to the terms of "application server node" or "application server instance" irrespective of whether a specific application server node (or network node) is realized as an (individual) physical machine or as a virtual machine (or virtual machine instance).

The control function node 150 is an example of a network node providing (IMS) control function functionality, wherein - especially in case of additional required capacity for providing the respective functionality and/or for redundancy and/or failover capacity reasons - it is possible and preferred that the core network 115 comprises, besides the control function node 150, further control function nodes (not represented in Figure 2), also providing the same (IMS) control function functionality (as the control function node 150). Likewise, the control function node 150 (or a plurality thereof) is (are) implemented or realized, according to an embodiment, as an (individual) physical machine. Alternatively, the control function node 150 (or the plurality thereof) is (are) implemented or realized as a virtual machine running on a physical hardware. In the context of the present invention, it is referred to the terms of "control function node" or "control function instance" irrespective of whether a specific control function node (or network node) is realized as an (individual) physical machine or as a virtual machine (or virtual machine instance).

According to the present invention, an enhanced monitoring and/or synchronization between the network nodes of the core network results if, in a first step, the first application server node 121 transmits a monitoring request message 129 to the at least one control function node 150, the monitoring request message comprising an address information being related to the IMS application server functionality provided by the plurality of application server nodes 120, and, in a second step, subsequent to the first step, the at least one control function node 121 transmits a monitoring response message 159 to a preferred destination network node of the plurality of application server nodes 120 for providing the IMS application server functionality, the preferred destination network node being determined by the at least one control function node 150 such that the preferred destination network node corresponds to either the first application server node 121 or to the second application server node 122 based on whether the first application server node 121 or the second application server node 122 is preferred, by the at least one control function node 150, among the plurality of application server nodes 120 regarding the IMS application server functionality.

According to the present invention, the control function node 150 especially corresponds to an S-CSCF, and the application server nodes 121, 122 especially correspond to network nodes providing an IMS application server functionality. According to 3GPP standardization, especially "3GPP 23.228, Annex J.3.2., Procedures related to Dynamic assignment of AS by S CSCF caching", methods are defined how an S-CSCF network node selects and uses an application server node (or application server instance) for the lifetime of a registration (of a user 20).

In case of communication failures to a given application server instance (or to the first application server node 121) the S-CSCF (i.e. the control function node 150) needs to re-select an alternative application server instance (i.e. a second application server node 122) which is either used temporarily until the preferred, original (or initial) application server node (or application server instance) is reachable again or until the end of the lifetime of the registration (if no further error occurs for the communication to the alternative application server instance (or second application server node 122) in which case the second application server node 122 would take the role of the first application server node, and a still further application server node (or third application server node) would take the role of the second application server node). In case of such a change of the application server instance due to a communication error, the alternative application server instance (or second application server node 122) will not have valid registration data of the user 20 and will apply recovery procedures to retrieve the registration data (or registration profile data) from the S-CSCF, i.e. from the control function node 150.

If during lifetime of the registration relating to the user 20, the communication is switched back to the original, preferred application server instance (i.e. the first application server node 121), this initial or original application server instance might not be aware about the temporary communication outage (including the shift to an alternative application server instance) and will not (or at least not necessarily) apply recovery procedures. Therefore, it will act based on outdated registration information that might lead to inappropriate behavior and/or call drop. The same issue applies, of course, for an alternative application server instance if communication changes several times between the original application server instance and alternative application server instance; in this case, the first and second application server nodes 121, 122 might changing their roles.

However according to the present description it is assumed
-- that the communication is first established between the control function node 150 and the first application server node 121 (leading to initially transmitting (first) registration profile data related to the user 20) - due to the first application server node 121 being, at that time, the preferred destination network node from the perspective of the control function node 150,
-- that the communication switches then to the second application server node 122 (due to a failure in the communication link between the control function node 150 and the second application server node 122; this also being the reason for the second application server node 122 being considered - by the control function node 150 and for, roughly, the time of failure of the communication link towards the first application server node 121 - the preferred destination network node), and
-- that, subsequently, the communication switches back again to the first application server node 121 (after restoration of the failure).

The control function node 150 (typically a S-CSCF network node) is able to bar an application server instance after one of the thresholds which might be defined for certain error events is reached (e.g. timeout for any SIP request, receipt of an overload respective system out of order indication). If an S-CSCF instance applies barring for an application server instance (first application server node 121), the S-CSCF instance might direct further SIP signaling to an alternative application server instance (second application server node 122). The barring typically ends after a predefined time period (barring time interval) or after the S-CSCF instance detects availability of the original application server instance (first application server node 121) by frequent communication checks which are independent from regular user communication sessions. If all available application server instances for a certain application server type (i.e. the plurality of application server nodes for providing the (IMS) application server functionality) are barred, the barring might be overruled or default handling as defined by iFCs (initial filter criteria) applies for the communication traffic. This default might be continued with session setup without application server invocation or release session setup.

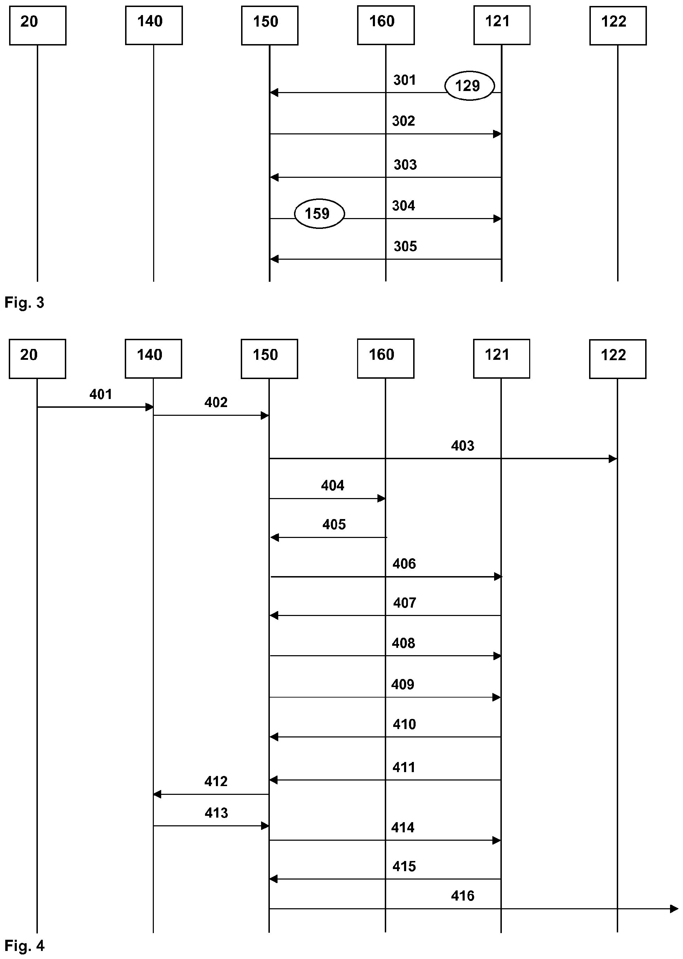

Figure 3 schematically shows a communication diagram between, inter alia the user 20 or user equipment 20, the control function node 150, the first application server node 121, and the second application server node 122. Additionally, a further control function node 140, especially a P-CSCF/ATCF (Proxy Call Session Control Function / Access Transfer Control Function), and a domain name system node 160 is involved in the communication.

In a first processing step 301, the first application server node 121 sends a monitoring request message 129 to the control function node 150, especially an "Invite PSI-AS_I1" message. According to a second processing step 302, the control function node 150 executes the corresponding iFC and selects the preferred application server node. As the first application server node 121 is cached as selected (or preferred application server node), the (monitoring request) message "Invite PSI-AS_I1" is directed or forwarded to the first application server node 121. In a third processing step 303, the first application server node 121 answers the monitoring request message 129 by means of transmitting a message indicating status information "500" directed to the preferred application server node (from the perspective of the control function node 150) to the control function node 150, which, in turn, is forwarded - in a fourth processing step 304 - by the control function node 150 to the first application server node 121 as the monitoring response message 159. The reception of the monitoring response message 159 indicates a successful check of the communication link between the control function node 150 and the first application server node 121 being assumed as being the preferred application server node for the respective application server functionality.

The non-successful exchange of the monitoring request message 129 and the monitoring response message 159 between the control function node 150 and the first application server node 121 is exemplarily described in the following: In a fifth processing step 305, the first application server node 121 sends a subsequent monitoring request message to the control function node 150, especially an "Invite PSI-AS_I1" message. However, due to an assumed barring of the first application server node 121 (by the control function node 150) for any communication, e.g. due to a communication error (which is not represented in Figure 3), the second application server node 122 is retained (or cached) as (at that point in time) the preferred destination network node for the subsequent monitoring request message; hence after a sufficiently long time interval subsequent to the fifth processing step 305, a timeout at the first application server node 121 occurs (triggering retaining a synchronization error time information or a "last sync error timestamp") due to not having received the return or response message (corresponding, relative to the subsequent monitoring request message, either to the equivalent of the second processing step 302 or of the fourth processing step 304).

Figure 4 schematically shows a communication diagram between, inter alia the user 20 or user equipment 20, the control function node 150, the first application server node 121, and the second application server node 122. Additionally, the further control function node 140, especially a P-CSCF/ATCF (Proxy Call Session Control Function / Access Transfer Control Function), and the domain name system node 160 is involved in the communication. The diagram shown in Figure 4 relates to a communication session being initiated or triggered, e.g. by a call being invoked, relating to the user 20 being already registered, i.e. the assumption is that the first application server node 121 comprises (first) registration profile data relating to the user 20. However, it is also assumed that the barring, by the control function node 150, of the first application server node 121 no longer applies (i.e. the communication link is restored and the first application server node 121 is unbarred in the meantime). In a sixth processing step 401, the user 20 or user equipment 20 transmits an "invite" message to the further control function node 140. In a seventh processing step 402, the further control function node 140 transmits the "invite" message (relating to the user equipment 20) to the control function node 150. The control function node 150 executes the iFC in order to trigger the cached application server to process the "invite" message. In an eighth processing step 403, the "invite" message is sent to the second application server node 122 due to the fact that the second application server node 122 has still been cached in the control function node 150 as the selected application server node (i.e. the preferred destination node to transmit the "invite" message to). After the eighth processing step 403, however, a timeout occurs regarding the second application server node 122, i.e. the second application server node 122 barred ("timeout barr AS_I2; new DNS query, since cached AS_I2 is barred"). Hence, a "DNS Request for Application Server" is transmitted, in a ninth processing step 404 to the domain name system node 160, which replies in a tenth processing step 405 by means of a message "DNS Response Prio1: AS_I1, Prio2: AS_I2", hence indicating that subsequently, the first application server node 121 is of higher priority compared to the second application server node 122. In an eleventh processing step 406, the "invite" message is transmitted to the first application server node 121, where the (first) registration profile data is available; however, the (first) registration profile data is not up to date. According to the present invention, the first application server node 121 is aware that the user equipment 20 (or user 20) has been served by an alternative application server instance, since the update time information ("last update timestamp") relating to the (first) registration profile data (i.e. stored at the time the (first) registration profile data have been retrieved by the first application server node 121) is farther back than the synchronization error time information ("last sync error timestamp"). As a consequence, the first application server node 121 transmits a "Subscribe" message in a twelfth processing step 407 which is answered by a "200 OK" message (by the control function node 150) in a thirteenth processing step 408. In a fourteenth processing step 409, the control function node 150 transmits a "Notify Reg. Profile including all registered clients, ATCF-id" to the first application server node 121, which is responded, in a fifteenth processing step 410 and by the first application server node 121, by a "200 OK" message towards the control function node 150. The outcome is that an updated registration profile, i.e. the second registration profile data, is stored or retained in the first application server node 121, i.e. comprising the correct registration data for all registered clients (of the user equipment 20 or user 20), hence the call handling for terminating calls in the future will consider correctly all registered clients. In sixteenth processing step 411 a "STN-SR (ID of AS_I1) message" is transmitted, by the first application server node 121, to the control function node 150, which message is forwarded to the further control function node 140 in a seventeenth processing step 412. The further control function node 140 stores the STN-SR (ID of AS_I1) resulting in a correct addressing of application server instance in case of a succeeding SRVCC (Single Radio Voice Call Continuity). In an eighteenth processing step 413, the further control function node 140 responds, by a "200 OK" message towards the control function node 150, to the "STN-SR Message". A further "200 OK" message is transmitted by the control function node 150 to the first application server node 121 in a nineteenth processing step 414, terminating the recovery of the communication failure; the first application server node 121 proceeds with the session setup by means of an "Invite" message to the control function node 150 in a twentieth processing step 415, thereby triggering to cache the first application server node 121 and to proceed with the session setup, represented by a twenty-first processing step 416.

According to the present invention, the different application server nodes of the plurality of application server nodes 120 providing an (IMS) application server functionality are repeatedly conducting connectivity check towards the corresponding control function nodes, typically the S-CSCF instances which provided registration data for at least one user to an application server instance. This is done by the different application server instances frequently establishing new session requests as monitoring request messages 129. These monitoring request message 129 or session requests are also referred to as "out of the blue" session requests, since it is not initiated by a user equipment/user/terminal towards the corresponding S-CSCF instance. Hereby, especially P-Asserted-Identity header is set to an identity which is assigned to the sending application server node or instance. Furthermore, the request is directed to a Public Service Identity (PSI); whereby each application server instance uses its own PSI for this procedure. The corresponding PSI profile (maintained preferably by IMS-HSS (Home Subscriber Server)) has an iFC which contains an application server (functionality) given by its FQDN (Fully Qualified Domain Name). This FQDN does not provide a dedicated application server instance, but refers to the type of service (i.e. the application server functionality) offered by the (plurality of) application server(s). Hereby, the type of service refers to, e.g., "MMTEL AS", "IP-SM-GW AS" as defined by 3GPP VoLTE standards.

According to the present invention, the handling of the monitoring request messages 129 (or "out of the blue Connectivity Check" request messages), by the control function node(s) 150, especially S-CSCF instances, is provided as follows:
Upon receipt of the request (i.e. the monitoring request message 129), the S-CSCF will retrieve the PSI profile from IMS-HSS, if it is not already available and verifies the iFCs provided by the profile;
The request will match, in the S-CSCF, an iFC for the PSI which invokes an ISC request (IMS Service Control request) towards the FQDN of the application server service type (i.e. not to a dedicated application server instance)
Due to the preference for the specific application server instance for this application server service type which has been provided by DNS (see 3GPP 23.228, Annex J.3.2., Procedures related to Dynamic assignment of AS by S CSCF caching), the S-CSCF will forward the request to the application server instance having sent the request (i.e. the monitoring request message 129) in case that the application server instance is not barred; otherwise the request will be sent to another application server instance or skipped if there is no further application server instance available.

If the request sent due to the "Connectivity Check" (i.e. the monitoring response message 159) is received by the application server instance that owns the PSI, then the request is released with an appropriate status code indicating success; in this case no immediate action is required. If the request sent due to the "Connectivity Check" (i.e. the monitoring response message 159) is received by an application server instance that does not own the PSI, then it will be released with another status code. The Connectivity Check will be repeated according to a configured frequency. If the Connectivity Check initiated by an application server instance times out or is not answered by a status code indicating success, then the application server instance stores the current time as "last sync error timestamp" for the S-CSCF instance for which the Connectivity Check has been sent and stops the frequent Connectivity Check for the given S-CSCF Instance. Upon successful receipt of the next initial session request respective stand-alone transaction received from this S-CSCF Instance, the application server instance will restart the frequent Connectivity Check for this S-CSCF Instance.

Timing Conditions (to allow successful Sync Supervision):
The time between the invocation of Connectivity Check (monitoring request message, 129) by an application server instance shall preferably be less than half of the minimum interval which is applied by an S-CSCF instance for barring of an application server instance. This minimum interval might be given by a fixed time interval or by the interval which is used by an S-CSCF instance to verify, by appropriate means, whether communication to an application server instance is working again after it was barred. The S-CSCF instance might send traffic to a barred application server instance, if all alternative application server instances are barred as well. In this case the application server instance might not have sent the Connectivity Check (monitoring request message 129) during a short period during which traffic to the application server instance was barred. On the other side, it is not likely that traffic has been sent from the S-CSCF instance to an alternative application server instance during such a short period of time. Therefore, the effect might be neglected, or the S-CSCF instance should be implemented in a way that it does not overrule barring in case that all application server instances are barred.

Receipt of registration data by AS Instances/Receipt of notification from an S-CSCF instance which provides registration information for a user (Notify might be invoked due to Registration, Re-Registration, Recovery (3rd Party Registration)):
The application server instance shall store the information together with the identity of the sending S-CSCF instance and an associated "last update timestamp" according to the time of receipt;
If there have already been valid (i.e. not expired) registration data with a "last update timestamp" older than the "last sync error timestamp" for the associated S-CSCF instance, then the application server instance shall behave as if there had been no registration data before, i.e. the application server instance invokes the same mechanisms as applied after a registration data recovery due to missing/expired/invalid registration data;
In case of, e.g., an SCC-AS (Service Centralization and Continuity application server), such a mechanism covers, e.g., a refresh of the SCC-AS Instance identity towards the ATCF to allow successful invocation of SRVCC for further calls.

Receipt of initial session request respective stand-alone transactions by application server instances for requests which do not provide registration data (i.e. no 3rd Party Registration):
With all other incoming initial requests respective stand-alone transactions from an S-CSCF instance the application server instance verifies whether registration information exists for the given user or user equipment 20. This proceeding is applicable for requests received via ISC-IF only, i.e. it is not applicable for requests via Ma interface, e.g. from ATCF.
If there is no valid registration information for the given user or the registration data has been provided from an S-CSCF instance different from the sending S-CSCF instance, the application server instance shall invoke the recovery procedure towards the sending S-CSCF instance before execution of the request proceeds.
Otherwise, if there is already a valid registration information for the given user, the application server instance shall verify whether the "last update timestamp" within the stored registration data is younger than the "last sync error timestamp" which is maintained by the application server instance for the sending S-CSCF instance; if this condition is not fulfilled then the application server instance shall invoke the recovery procedure towards the sending S-CSCF instance before execution of the request proceeds.

## Claims

1. Method for an enhanced monitoring and/or synchronization between network nodes of a telecommunications network (100) realizing an IP Multimedia Subsystem (IMS) network and serving a user (20) of the telecommunications network (100),
wherein the telecommunications network (100) comprises a plurality of application server nodes (120) for providing an IMS application server functionality, and at least one control function node (150) for providing an IMS control function functionality, wherein the plurality of application server nodes (120) comprises at least a first application server node (121) and a second application server node (122),
wherein the method comprises the following steps:
-- in a first step, the first application server node (121) transmits a monitoring request message (129) to the at least one control function node (150), the monitoring request message (129) comprising an address information being related to the IMS application server functionality provided by the plurality of application server nodes (120),
-- in a second step, subsequent to the first step, the at least one control function node (150) transmits a monitoring response message (159) to a preferred destination network node of the plurality of application server nodes (120) for providing the IMS application server functionality, the preferred destination network node being determined by the at least one control function node (150),
wherein the preferred destination network node corresponds to either the first application server node (121) or to the second application server node (122) based on whether the first application server node (121) or the second application server node (122) is preferred, by the at least one control function node (150), among the plurality of application server nodes (120) regarding the IMS application server functionality.

2. Method according to claim 1, wherein a registration process related to the user (20) involves the transmission of first registration profile data, related to the user (20), from the at least one control function node (150) to the first application server node (121), wherein the method additionally comprises the steps of:
-- in a third step, prior to the first step, the first application server node (121) receives initial or updated registration profile data from the at least one control function node (150),
-- in a fourth step, subsequent to the second step, - in case of the monitoring response message (159) having not been transmitted to the first application server node (121) - the first application server node (121) requests the transmission of second registration profile data, related to the user (20), from the at least one control function node (150), the second registration profile data corresponding to updated registration profile data related to the user (20).

3. Method according to one of the preceding claims, wherein the first application server node (121) requests the transmission of second registration profile data only after having received an information that a communication session is requested and/or initiated by the user (20).

4. Method according to one of the preceding claims, wherein - in case of the monitoring response message (159) having been transmitted to the first application server node (121) - the first registration profile data are regarded as appropriate, and wherein - in case of the monitoring response message (159) having not been transmitted to the first application server node (121) - the first registration profile data are required to being updated.

5. Method according to one of the preceding claims, wherein the preferred destination network node is determined by the at least one control function node (150), based on the address information being related to the IMS application server functionality provided by the plurality of application server nodes (120), wherein the address information preferably corresponds to at least one out of a public service identity profile information and a fully qualified domain name (FQDN) information,
wherein the public service identity profile information is especially related to the IMS application server functionality provided by the plurality of application server nodes (120), and/or
wherein the address information especially corresponds to the public service identity profile information from which the at least one control function node (150) derives or determines the fully qualified domain name (FQDN) information related to the IMS application server functionality provided by the plurality of application server nodes (120), the preferred destination network node especially being determined - especially by means of a domain name system (DNS) request performed by the at least one ccontrol function node(150) - by determining the internet protocol address (IP address) of the preferred destination network node.

6. Method according to one of the preceding claims, wherein the transmission of a monitoring request message (129) of the first step and the transmission of the monitoring response message (159) of the second step is repeated in a subsequent first step, involving the transmission of a subsequent monitoring request message, and in a subsequent second step, involving the transmission of a subsequent monitoring response message, wherein a repetition time interval corresponds to the time difference between the transmission of the monitoring request message (129) and the subsequent monitoring request message, wherein the at least one control function node (150) applies a barring time interval or a plurality of barring time intervals during which communication towards the first and/or the second application server node (121, 122) is at least partly barred in case of failure of the respective application server node (121, 122), wherein the repetition time interval preferably corresponds to less than the barring time interval or less than the minimum of the plurality of barring time intervals, preferably less than half of the barring time interval or less than half of the minimum of the plurality of barring time intervals.

7. Method according to one of the preceding claims, wherein the monitoring request message (129) corresponds to a request of the form used for a new communication session, wherein the monitoring request message (129) especially comprises a P-Asserted-Identity header such that the P-Asserted-Identity header is set to an identity assigned to the first application server node (121) and/or wherein the monitoring request message (129) especially comprises a specific public service identity information, the specific public service identity information being specific to the first application server node (121).

8. Method according to one of the preceding claims, wherein the monitoring request message (129) and the monitoring response message (159) are IMS service control messages.

9. Telecommunications network (100) for an enhanced monitoring and/or synchronization between network nodes of the telecommunications network (100), the telecommunications network (100) realizing an IP Multimedia Subsystem (IMS) network and serving a user (20) of the telecommunications network (100),
wherein the telecommunications network (100) comprises a plurality of application server nodes (120) for providing an IMS application server functionality, and at least one control function node (150) for providing an IMS control function functionality, wherein the plurality of application server nodes (120) comprises at least a first application server node (121) and a second application server node (122),
wherein the telecommunications network (100) is configured such that:
-- a monitoring request message (129) is transmitted, by the first application server node (121), to the at least one control function node (150), the monitoring request message (129) comprising an address information being related to the IMS application server functionality provide by the plurality of application server nodes (120),
-- a monitoring response message (159) is transmitted, by the at least one control function node (150), to a preferred destination network node of the plurality of application server nodes (120) for providing the IMS application server functionality, the preferred destination network node being determined by the at least one control function node (150),
wherein the preferred destination network node corresponds either to the first application server node (121) or to the second application server node (122) based on whether the first application server node (121) or the second application server node (122) is preferred, by the at least one control function node (150), among the plurality of application server nodes (120) regarding the IMS application server functionality.

10. Telecommunications network (100) according to claim 9, wherein a registration process related to the user (20) involves the transmission of first registration profile data, related to the user (20), from the at least one control function node (150) to the first application server node (121), wherein the telecommunications network (100) is configured such that:
-- initial or updated registration profile data are received, by the first application server node (121), from the at least one control function node (150),
-- in case of the monitoring response message (159) having been transmitted to the first application server node (121), the first registration profile data are regarded as appropriate, and in case of the monitoring response message (159) having not been transmitted to the first application server node (121), second registration profile data, related to the user (20), are requested, by the first application server node (121), from the at least one control function node (150), the second registration profile data corresponding to updated registration profile data related to the user (20), wherein preferably the transmission of second registration profile data are requested, by the first application server node (121), only after having received an information that a communication session is requested and/or initiated by the user (20).

11. System for an enhanced monitoring and/or synchronization between network nodes of the telecommunications network (100), the telecommunications network (100) realizing an IP Multimedia Subsystem (IMS) network and serving a user (20) of the telecommunications network (100),
wherein the system comprises the telecommunications network (100) and a plurality of application server nodes (120) for providing an IMS application server functionality, wherein the telecommunications network (100) comprises at least one control function node (150) for providing an IMS control function functionality, wherein the plurality of application server nodes (120) comprises at least a first application server node (121) and a second application server node (122),
wherein the system is configured such that:
-- a monitoring request message (129) is transmitted, by the first application server node (121), to the at least one control function node (150), the monitoring request message (129) comprising an address information being related to the IMS application server functionality provided by the plurality of application server nodes (120),
-- a monitoring response message (159) is transmitted, by the at least one control function node (150), to a preferred destination network node of the plurality of application server nodes (120) for providing the IMS application server functionality, the preferred destination network node being determined by the at least one control function node (150),
wherein the preferred destination network node corresponds either to the first application server node (121) or to the second application server node (122) based on whether the first application server node (121) or the second application server node (122) is preferred, by the at least one control function node (150), among the plurality of application server nodes (120) regarding the IMS application server functionality.

12. System according to claim 11, wherein a registration process related to the user (20) involves the transmission of first registration profile data, related to the user (20), from the at least one control function node (150) to the first application server node (121), wherein the system is configured such that:
-- initial or updated registration profile data are received, by the first application server node (121), from the at least one control function node (150),
-- in case of the monitoring response message (159) having been transmitted to the first application server node (121), the first registration profile data are regarded as appropriate, and in case of the monitoring response message (159) having not been transmitted to the first application server node (121), second registration profile data, related to the user (20), are requested, by the first application server node (121), from the at least one control function node (150), the second registration profile data corresponding to updated registration profile data related to the user (20), wherein preferably the transmission of second registration profile data are requested, by the first application server node (121), only after having received an information that a communication session is requested and/or initiated by the user (20).

13. Program comprising a computer readable program code which, when executed in part on a plurality of application server nodes (120) and in part on a control function node (150) of a telecommunications network (100), causes the plurality of application server nodes (120) and the control function node (150) to perform a method according one of claims 1 to 8.

14. Computer readable medium for an enhanced monitoring and/or synchronization between network nodes of a telecommunications network realizing an IP Multimedia Subsystem network, the computer readable medium comprising a computer program, the computer program comprising program code which, when executed in part on a plurality of application server nodes (120) and in part on a control function node (150) of a telecommunications network (100), causes the plurality of application server nodes (120) and the control function node (150) to perform a method according one of claims 1 to 8.

## Patentansprüche

1. Verfahren für eine verbesserte Überwachung und/oder Synchronisation zwischen Netzwerkknoten eines Telekommunikationsnetzes (100), das ein IP Multimedia Subsystem (IMS)-Netz realisiert und einen Nutzer (20) des Telekommunikationsnetzes (100) bedient,
wobei das Telekommunikationsnetz (100) Folgendes umfasst: mehrere Anwendungsserverknoten (120) zum Bereitstellen einer IMS-Anwendungsserver-Funktionalität, und mindestens einen Steuerfunktionsknoten (150) zum Bereitstellen einer IMS-Steuerfunktions-Funktionalität, wobei die mehreren Anwendungsserverknoten (120) mindestens einen ersten Anwendungsserverknoten (121) und einen zweiten Anwendungsserverknoten (122) umfassen,
wobei das Verfahren die folgenden Schritte umfasst:
- in einem ersten Schritt sendet der erste Anwendungsserverknoten (121) eine Überwachungsanforderungsnachricht (129) an den mindestens einen Steuerfunktionsknoten (150), wobei die Überwachungsanforderungsnachricht (129) eine Adressinformation umfasst, die im Zusammenhang mit der IMS-Anwendungsserver-Funktionalität steht, die durch die mehreren Anwendungsserverknoten (120) bereitgestellt wird,
- in einem zweiten Schritt, im Anschluss an den ersten Schritt, sendet der mindestens eine Steuerfunktionsknoten (150) eine Überwachungsantwortnachricht (159) an einen bevorzugten Zielort-Netzwerkknoten der mehreren Anwendungsserverknoten (120) zum Bereitstellen der IMS-Anwendungsserver-Funktionalität, wobei der bevorzugte Zielort-Netzwerkknoten durch den mindestens einen Steuerfunktionsknoten (150) bestimmt wird,
wobei der bevorzugte Zielort-Netzwerkknoten entweder dem ersten Anwendungsserverknoten (121) oder dem zweiten Anwendungsserverknoten (122) entspricht, je nachdem, ob der erste Anwendungsserverknoten (121) oder der zweite Anwendungsserverknoten (122) durch den mindestens einen Steuerfunktionsknoten (150) unter den mehreren Anwendungsserverknoten (120) bezüglich der IMS-Anwendungsserver-Funktionalität bevorzugt ist.

2. Verfahren nach Anspruch 1, wobei ein Registrierungsprozess bezüglich des Nutzers (20) das Senden erster Registrierungsprofildaten bezüglich des Nutzers (20) von dem mindestens einen Steuerfunktionsknoten (150) an den ersten Anwendungsserverknoten (121) umfasst, wobei das Verfahren zusätzlich folgende Schritte umfasst:
- in einem dritten Schritt, vor dem ersten Schritt, empfängt der erste Anwendungsserverknoten (121) anfängliche oder aktualisierte Registrierungsprofildaten von dem mindestens einen Steuerfunktionsknoten (150),
- in einem vierten Schritt, im Anschluss an den zweite Schritt, falls die Überwachungsantwortnachricht (159) nicht an den ersten Anwendungsserverknoten (121) gesendet wurde, verlangt der erste Anwendungsserverknoten (121) das Senden zweiter Registrierungsprofildaten bezüglich des Nutzers (20) von dem mindestens einen Steuerfunktionsknoten (150), wobei die zweiten Registrierungsprofildaten aktualisierten Registrierungsprofildaten bezüglich des Nutzers (20) entsprechen.

3. Verfahren nach einem der vorangehenden Ansprüche, wobei der erste Anwendungsserverknoten (121) das Senden zweiter Registrierungsprofildaten erst verlangt, nachdem er eine Information empfangen hat, dass eine Kommunikationssitzung durch den Nutzer (20) angefordert und/oder initiiert wurde.

4. Verfahren nach einem der vorangehenden Ansprüche, wobei für den Fall, dass die Überwachungsantwortnachricht (159) an den ersten Anwendungsserverknoten (121) gesendet wurde, die ersten Registrierungsprofildaten als ausreichend angesehen werden, und wobei, falls die Überwachungsantwortnachricht (159) nicht an den ersten Anwendungsserverknoten (121) gesendet wurde, eine Aktualisierung der ersten Registrierungsprofildaten verlangt wird.

5. Verfahren nach einem der vorangehenden Ansprüche, wobei der bevorzugte Zielort-Netzwerkknoten durch den mindestens einen Steuerfunktionsknoten (150) anhand der Adressinformation im Zusammenhang mit der IMS-Anwendungsserver-Funktionalität, die durch die mehreren Anwendungsserverknoten (120) bereitgestellt wird, bestimmt wird, wobei die Adressinformation bevorzugt mindestens einer von einer Public Service Identity Profile-Information und einer Fully Qualified Domain Name (FQDN)-Information entspricht,
wobei die Public Service Identity Profile-Information insbesondere im Zusammenhang mit der IMS-Anwendungsserver-Funktionalität steht, die durch die mehreren Anwendungsserverknoten (120) bereitgestellt wird, und/oder wobei die Adressinformation insbesondere der Public Service Identity Profile-Information entspricht, von welcher der mindestens eine Steuerfunktionsknoten (150) die Fully Qualified Domain Name (FQDN)-Information im Zusammenhang mit der IMS-Anwendungsserver-Funktionalität herleitet oder bestimmt, die durch die mehreren Anwendungsserverknoten (120) bereitgestellt wird, wobei der bevorzugte Zielort-Netzwerkknoten insbesondere bestimmt wird - insbesondere unter Verwendung einer Domain Name System (DNS)-Anforderung, die durch den mindestens einen Steuerfunktionsknoten (150) ausgeführt wird -, indem die Internet Protocol Adresse (IP-Adresse) des bevorzugten Zielort-Netzwerkknotens bestimmt wird.

6. Verfahren nach einem der vorangehenden Ansprüche, wobei das Senden einer Überwachungsanforderungsnachricht (129) des ersten Schrittes und das Senden der Überwachungsantwortnachricht (159) des zweiten Schrittes in einem anschließenden ersten Schritt, der das Senden einer anschließenden Überwachungsanforderungsnachricht umfasst, und in einem anschließenden zweiten Schritt, der das Senden einer anschließenden Überwachungsantwortnachricht umfasst, wiederholt werden, wobei ein Wiederholungszeitintervall der Zeitdifferenz zwischen dem Senden der Überwachungsanforderungsnachricht (129) und der anschließenden Überwachungsanforderungsnachricht entspricht, wobei der mindestens eine Steuerfunktionsknoten (150) ein Sperrzeitintervall oder mehrere Sperrzeitintervalle anwendet, während denen die Kommunikation in Richtung des ersten und/oder des zweiten Anwendungsserverknotens (121, 122) mindestens teilweise gesperrt ist, falls der jeweilige Anwendungsserverknoten (121, 122) ausfällt, wobei das Wiederholungszeitintervall bevorzugt weniger als dem Sperrzeitintervall oder weniger als dem Minimum der mehreren Sperrzeitintervalle entspricht, bevorzugt weniger als die Hälfte des Sperrzeitintervalls oder weniger als die Hälfte des Minimums der mehreren Sperrzeitintervalle.

7. Verfahren nach einem der vorangehenden Ansprüche, wobei die Überwachungsanforderungsnachricht (129) einer Anforderung der Form entspricht, die für eine neue Kommunikationssitzung verwendet wird, wobei die Überwachungsanforderungsnachricht (129) insbesondere einen P-Asserted-Identity-Header umfasst, so dass der P-Asserted-Identity-Header auf eine Identität eingestellt wird, die dem ersten Anwendungsserverknoten (121) zugewiesen ist, und/oder wobei die Überwachungsanforderungsnachricht (129) insbesondere eine spezifische Public Service Identity-Information umfasst, wobei die spezifische Public Service Identity-Information für den ersten Anwendungsserverknoten (121) spezifisch ist.

8. Verfahren nach einem der vorangehenden Ansprüche, wobei die Überwachungsanforderungsnachricht (129) und die Überwachungsantwortnachricht (159) IMS-Dienststeuerungsnachrichten sind.

9. Telekommunikationsnetz (100) für eine verbesserte Überwachung und/oder Synchronisation zwischen Netzwerkknoten des Telekommunikationsnetzes (100), wobei das Telekommunikationsnetz (100) ein IP Multimedia Subsystem (IMS)-Netz realisiert und einen Nutzer (20) des Telekommunikationsnetzes (100) bedient,
wobei das Telekommunikationsnetz (100) Folgendes umfasst: mehrere Anwendungsserverknoten (120) zum Bereitstellen einer IMS-Anwendungsserver-Funktionalität, und mindestens einen Steuerfunktionsknoten (150) zum Bereitstellen einer IMS-Steuerfunktions-Funktionalität, wobei die mehreren Anwendungsserverknoten (120) mindestens einen ersten Anwendungsserverknoten (121) und einen zweiten Anwendungsserverknoten (122) umfassen,
wobei das Telekommunikationsnetz (100) so ausgestaltet ist, dass:
- eine Überwachungsanforderungsnachricht (129) durch den ersten Anwendungsserverknoten (121) an den mindestens einen Steuerfunktionsknoten (150) gesendet wird, wobei die Überwachungsanforderungsnachricht (129) eine Adressinformation umfasst, die im Zusammenhang mit der IMS-Anwendungsserver-Funktionalität steht, die durch die mehreren Anwendungsserverknoten (120) bereitgestellt wird,
- eine Überwachungsantwortnachricht (159), die durch den mindestens einen Steuerfunktionsknoten (150) an einen bevorzugten Zielort-Netzwerkknoten der mehreren Anwendungsserverknoten (120) zum Bereitstellen der IMS-Anwendungsserver-Funktionalität gesendet wird, wobei der bevorzugte Zielort-Netzwerkknoten durch den mindestens einen Steuerfunktionsknoten (150) bestimmt wird,
wobei der bevorzugte Zielort-Netzwerkknoten entweder dem ersten Anwendungsserverknoten (121) oder dem zweiten Anwendungsserverknoten (122) entspricht, je nachdem, ob der erste Anwendungsserverknoten (121) oder der zweite Anwendungsserverknoten (122) durch den mindestens einen Steuerfunktionsknoten (150) unter den mehreren Anwendungsserverknoten (120) bezüglich der IMS-Anwendungsserver-Funktionalität bevorzugt ist.

10. Telekommunikationsnetz (100) nach Anspruch 9, wobei ein Registrierungsprozess bezüglich des Nutzers (20) das Senden erster Registrierungsprofildaten bezüglich des Nutzers (20) von dem mindestens einen Steuerfunktionsknoten (150) an den ersten Anwendungsserverknoten (121) umfasst, wobei das Telekommunikationsnetz (100) so ausgestaltet ist, dass:
- anfängliche oder aktualisierte Registrierungsprofildaten durch den ersten Anwendungsserverknoten (121) von dem mindestens einen Steuerfunktionsknoten (150) empfangen werden,
- falls die Überwachungsantwortnachricht (159) an den ersten Anwendungsserverknoten (121) gesendet wurde, die ersten Registrierungsprofildaten als ausreichend angesehen werden, und falls die Überwachungsantwortnachricht (159) nicht an den ersten Anwendungsserverknoten (121) gesendet wurde, zweite Registrierungsprofildaten bezüglich des Nutzers (20) durch den ersten Anwendungsserverknoten (121) von dem mindestens einen Steuerfunktionsknoten (150) angefordert werden, wobei die zweiten Registrierungsprofildaten aktualisierten Registrierungsprofildaten bezüglich des Nutzers (20) entsprechen, wobei bevorzugt das Senden zweiter Registrierungsprofildaten durch den ersten Anwendungsserverknoten (121) erst angefordert wird, nachdem er eine Information empfangen hat, dass eine Kommunikationssitzung durch den Nutzer (20) angefordert und/oder initiiert wurde.

11. System für eine verbesserte Überwachung und/oder Synchronisation zwischen Netzwerkknoten des Telekommunikationsnetzes (100), wobei das Telekommunikationsnetz (100) ein IP Multimedia Subsystem (IMS)-Netz realisiert und einen Nutzer (20) des Telekommunikationsnetzes (100) bedient,
wobei das System das Telekommunikationsnetz (100) und mehrere Anwendungsserverknoten (120) zum Bereitstellen einer IMS-Anwendungsserver-Funktionalität umfasst, wobei das Telekommunikationsnetz (100) mindestens einen Steuerfunktionsknoten (150) zum Bereitstellen einer IMS-Steuerfunktions-Funktionalität umfasst, wobei die mehreren Anwendungsserverknoten (120) mindestens einen ersten Anwendungsserverknoten (121) und einen zweiten Anwendungsserverknoten (122) umfassen,
wobei das System so ausgestaltet ist, dass:
- eine Überwachungsanforderungsnachricht (129) durch den ersten Anwendungsserverknoten (121) an den mindestens einen Steuerfunktionsknoten (150) gesendet wird, wobei die Überwachungsanforderungsnachricht (129) eine Adressinformation umfasst, die im Zusammenhang mit der IMS-Anwendungsserver-Funktionalität steht, die durch die mehreren Anwendungsserverknoten (120) bereitgestellt wird,
- eine Überwachungsantwortnachricht (159) durch den mindestens einen Steuerfunktionsknoten (150) an einen bevorzugten Zielort-Netzwerkknoten der mehreren Anwendungsserverknoten (120) zum Bereitstellen der IMS-Anwendungsserver-Funktionalität gesendet wird, wobei der bevorzugte Zielort-Netzwerkknoten durch den mindestens einen Steuerfunktionsknoten (150) bestimmt wird,
wobei der bevorzugte Zielort-Netzwerkknoten entweder dem ersten Anwendungsserverknoten (121) oder dem zweiten Anwendungsserverknoten (122) entspricht, je nachdem, ob der erste Anwendungsserverknoten (121) oder der zweite Anwendungsserverknoten (122) durch den mindestens einen Steuerfunktionsknoten (150) unter den mehreren Anwendungsserverknoten (120) bezüglich der IMS-Anwendungsserver-Funktionalität bevorzugt ist.

12. System nach Anspruch 11, wobei ein Registrierungsprozess bezüglich des Nutzers (20) das Senden erster Registrierungsprofildaten bezüglich des Nutzers (20) von dem mindestens einen Steuerfunktionsknoten (150) an den ersten Anwendungsserverknoten (121) umfasst, wobei das System so ausgestaltet ist, dass:
- anfängliche oder aktualisierte Registrierungsprofildaten durch den ersten Anwendungsserverknoten (121) von dem mindestens einen Steuerfunktionsknoten (150) empfangen werden,
- falls die Überwachungsantwortnachricht (159) an den ersten Anwendungsserverknoten (121) gesendet wurde, die ersten Registrierungsprofildaten als ausreichend angesehen werden, und falls die Überwachungsantwortnachricht (159) nicht an den ersten Anwendungsserverknoten (121) gesendet wurde, zweite Registrierungsprofildaten bezüglich des Nutzers (20) durch den ersten Anwendungsserverknoten (121) von dem mindestens einen Steuerfunktionsknoten (150) angefordert werden, wobei die zweiten Registrierungsprofildaten aktualisierten Registrierungsprofildaten bezüglich des Nutzers (20) entsprechen, wobei bevorzugt das Senden zweiter Registrierungsprofildaten durch den ersten Anwendungsserverknoten (121) erst angefordert wird, nachdem er eine Information empfangen hat, dass eine Kommunikationssitzung durch den Nutzer (20) angefordert und/oder initiiert wurde.

13. Programm, das einen computerlesbaren Programmcode umfasst, der, wenn er zum Teil auf mehreren Anwendungsserverknoten (120) und zum Teil auf einem Steuerfunktionsknoten (150) eines Telekommunikationsnetzes (100) ausgeführt wird, veranlasst, dass die mehreren Anwendungsserverknoten (120) und der Steuerfunktionsknoten (150) ein Verfahren nach einem der Ansprüche 1 bis 8 ausführen.

14. Computerlesbares Medium für eine verbesserte Überwachung und/oder Synchronisation zwischen Netzwerkknoten eines Telekommunikationsnetzes, das ein IP Multimedia Subsystem-Netz realisiert, wobei das computerlesbare Medium ein Computerprogramm umfasst, wobei das Computerprogramm Programmcode umfasst, der, wenn er zum Teil auf mehreren Anwendungsserverknoten (120) und zum Teil auf einem Steuerfunktionsknoten (150) eines Telekommunikationsnetzes (100) ausgeführt wird, veranlasst, dass die mehreren Anwendungsserverknoten (120) und der Steuerfunktionsknoten (150) ein Verfahren nach einem der Ansprüche 1 bis 8 ausführen.

## Revendications

1. Procédé de surveillance et/ou de synchronisation améliorées entre des noeuds de réseau d'un réseau de télécommunication (100) réalisant un réseau de sous-système multimédia IP (IMS) et desservant un utilisateur (20) du réseau de télécommunication (100),
dans lequel le réseau de télécommunication (100) comprend une pluralité de noeuds de serveur d'application (120) pour fournir une fonctionnalité de serveur d'application IMS, et au moins un noeud de fonction de commande (150) pour fournir la fonctionnalité de fonction de commande IMS, dans lequel la pluralité de noeuds de serveur d'application (120) comprennent au moins un premier noeud de serveur d'application (121) et un second noeud de serveur d'application (122),
dans lequel le procédé comprend les étapes suivantes :
- dans une première étape, le premier noeud de serveur d'application (121) transmet un message de demande de surveillance (129) audit au moins un noeud de fonction de commande (150), le message de demande de surveillance (129) comprenant des informations d'adresse qui sont relatives à la fonctionnalité de serveur d'application IMS fournie par la pluralité de noeuds de serveur d'application (120),
- dans une seconde étape, subséquente à la première étape, ledit au moins un noeud de fonction de commande (150) transmet un message de réponse de surveillance (159) à un noeud de réseau de destination préféré de la pluralité de noeuds de serveur d'application (120) pour fournir la fonctionnalité de serveur d'application IMS, le noeud de réseau de destination préféré étant déterminé par ledit au moins un noeud de fonction de commande (150),
dans lequel le noeud de réseau de destination préféré correspond au premier noeud de serveur d'application (121) ou au second noeud de serveur d'application (122) selon que le premier noeud de serveur d'application (121) ou le second noeud de serveur d'application est préféré, par ledit au moins un noeud de fonction de commande (150), parmi la pluralité de noeuds de serveur d'application (120) concernant la fonctionnalité de serveur d'application IMS.

2. Procédé selon la revendication 1, dans lequel un processus d'enregistrement relatif à l'utilisateur (20) implique la transmission de premières données de profil d'enregistrement, relatives à l'utilisateur (20), à partir dudit au moins un noeud de fonction de commande (150) au premier noeud de serveur d'application (121), dans lequel le procédé comprend en outre les étapes suivantes :
- dans une troisième étape, avant la première étape, le premier noeud de serveur d'application (121) reçoit des données de profil d'enregistrement initiales ou mises à jour à partir dudit au moins un noeud de fonction de commande (150),
- dans une quatrième étape, subséquente à la seconde étape, dans le cas où le message de réponse de surveillance (159) n'a pas été transmis au premier noeud serveur d'application (121) le premier noeud serveur d'application (121) demande la transmission de secondes données de profil d'enregistrement, relatives à l'utilisateur (20), à partir dudit au moins un noeud de fonction de commande (150), les secondes données de profil d'enregistrement correspondant à des données de profil d'enregistrement mises à jour relatives à l'utilisateur (20).

3. Procédé selon l'une des revendications précédentes, dans lequel le premier noeud de serveur d'application (121) demande la transmission de secondes données de profil d'enregistrement seulement après avoir reçu une information selon laquelle une session de communication est demandée et/ou initiée par l'utilisateur (20).

4. Procédé selon l'une des revendications précédentes, dans lequel dans le cas où le message de réponse de surveillance (159) a été transmis au premier noeud de serveur d'application (121) les premières données de profil d'enregistrement sont considérées comme appropriées, et dans lequel dans le cas où le message de réponse de surveillance (159) n'a pas été transmis au premier noeud de serveur d'application (121) les premières données de profil d'enregistrement doivent être mises à jour.

5. Procédé selon l'une des revendications précédentes, dans lequel le noeud de réseau de destination préféré est déterminé par au moins un noeud de fonction de commande (150), sur la base des informations d'adresse relatives à la fonctionnalité de serveur d'application IMS fournie par la pluralité de noeuds de serveur d'application (120), dans lequel les informations d'adresse correspondent de préférence à au moins l'un parmi des informations de profil d'identité de service public et des informations de nom de domaine complet (FQDN),
dans lequel les informations de profil d'identité de service public sont en particulier relatives à la fonctionnalité de serveur d'application IMS fournie par la pluralité de noeuds de serveur d'application (120), et/ou
dans lequel les informations d'adresse correspondent en particulier aux informations de profil d'identité de service public à partir desquelles ledit au moins un noeud de fonction de commande (150) dérive ou détermine les informations de nom de domaine complet (FQDN) relatives à la fonctionnalité de serveur d'application IMS fournie par la pluralité de noeuds de serveur d'application (120), le noeud de réseau de destination préféré étant déterminé en particulier au moyen d'une demande de système de nom de domaine (DNS) effectuée par ledit au moins un noeud de fonction de commande (150) en déterminant l'adresse de protocole Internet (adresse IP) du noeud de réseau de destination préféré.

6. Procédé selon l'une des revendications précédentes, dans lequel la transmission d'un message de demande de surveillance (129) de la première étape et la transmission du message de réponse de surveillance (159) de la seconde étape sont répétées dans une première étape subséquente, impliquant la transmission d'un message de demande de surveillance subséquent, et dans une seconde étape subséquente, impliquant la transmission d'un message de réponse de surveillance subséquent, dans lequel un intervalle de temps de répétition correspond à la différence de temps entre la transmission du message de demande de surveillance (129) et le message de demande de surveillance subséquent, dans lequel ledit au moins un noeud de fonction de commande (150) applique un intervalle de temps d'interdiction ou une pluralité d'intervalles de temps d'interdiction pendant lesquels la communication vers le premier et/ou le second noeud de serveur d'application (121, 122) est au moins partiellement interdite en cas de défaillance du noeud de serveur d'application respectif (121, 122), dans lequel l'intervalle de temps de répétition correspond de préférence à moins que l'intervalle de temps d'interdiction ou moins que le minimum de la pluralité d'intervalles de temps d'interdiction, de préférence moins que la moitié de l'intervalle de temps d'interdiction ou moins que la moitié du minimum de la pluralité d'intervalles de temps d'interdiction.

7. Procédé selon l'une des revendications précédentes, dans lequel le message de demande de surveillance (129) correspond à une demande de la forme utilisée pour une nouvelle session de communication, dans lequel le message de demande de surveillance (129) comprend en particulier un entête P-Asserted-Identity de sorte que l'en-tête P-Asserted-Identity soit réglé sur une identité attribuée au premier noeud de serveur d'application (121) et/ou dans lequel le message de demande de surveillance (129) comprend en particulier des informations d'identité de service public spécifiques, les informations d'identité de service public spécifiques étant spécifiques au premier noeud de serveur d'application (121).

8. Procédé selon l'une des revendications précédentes, dans lequel le message de demande de surveillance (129) et le message de réponse de surveillance (159) sont des messages de commande de service IMS.

9. Réseau de télécommunication (100) pour une surveillance et/ou synchronisation améliorées entre des noeuds de réseau du réseau de télécommunication (100), le réseau de télécommunication (100) réalisant un réseau de sous-système multimédia IP (IMS) et desservant un utilisateur (20) du réseau de télécommunication (100),
dans lequel le réseau de télécommunication (100) comprend une pluralité de noeuds de serveur d'application (120) pour fournir une fonctionnalité de serveur d'application IMS, et au moins un noeud de fonction de commande (150) pour fournir la fonctionnalité de fonction de commande IMS, dans lequel la pluralité noeuds de serveur d'application (120) comprennent au moins un premier noeud de serveur d'application (121) et un second noeud de serveur d'application (122),
dans lequel le réseau de télécommunication (100) est configuré de sorte que :
- un message de demande de surveillance (129) soit transmis, par le premier noeud serveur d'application (121), audit au moins un noeud de fonction de commande (150), le message de demande de surveillance (129) comprenant des informations d'adresse relatives à la fonctionnalité de serveur d'application IMS fournie par la pluralité de noeuds de serveur d'application (120),
- un message de réponse de surveillance (159) soit transmis, par ledit au moins un noeud de fonction de commande (150), à un noeud de réseau de destination préféré de la pluralité de noeuds de serveur d'application (120) pour fournir la fonctionnalité de serveur d'application IMS, le noeud de réseau de destination préféré étant déterminé par ledit au moins un noeud de fonction de commande (150),
dans lequel le noeud de réseau de destination préféré correspond au premier noeud serveur d'application (121) ou au second noeud serveur d'application (122) selon que le premier noeud serveur d'application (121) ou le second noeud serveur d'application (122) est préféré, par ledit au moins un noeud de fonction de commande (150), parmi la pluralité de noeuds de serveur d'application (120) concernant la fonctionnalité de serveur d'application IMS.

10. Réseau de télécommunication (100) selon la revendication 9, dans lequel un processus d'enregistrement relatif à l'utilisateur (20) implique la transmission de premières données de profil d'enregistrement, relatives à l'utilisateur (20), à partir dudit au moins un noeud de fonction de commande (150) au premier noeud de serveur d'application (121), dans lequel le réseau de télécommunications (100) est configuré de sorte que :
- des données de profil d'enregistrement initiales ou mises à jour soient reçues, par le premier noeud de serveur d'application (121), à partir dudit au moins un noeud de fonction de commande (150),
- dans le cas où le message de réponse de surveillance (159) a été transmis au premier noeud serveur d'application (121), les premières données de profil d'enregistrement soient considérées comme appropriées, et dans le cas où le message de réponse de surveillance (159) n'a pas été transmis au premier noeud de serveur d'application (121), de secondes données de profil d'enregistrement, relatives à l'utilisateur (20), soient demandées, par le premier noeud de serveur d'application (121), à partir dudit au moins au noeud de fonction de commande (150), les secondes données de profil d'enregistrement correspondant à des données de profil d'enregistrement mises à jour relatives à l'utilisateur (20), dans lequel, de préférence, la transmission de secondes données de profil d'enregistrement est demandée, par le premier noeud serveur d'application (121), seulement après avoir reçu une information indiquant qu'une session de communication est demandée et/ou initiée par l'utilisateur (20).

11. Système de surveillance et/ou de synchronisation améliorées entre des noeuds de réseau du réseau de télécommunication (100), le réseau de télécommunication (100) réalisant un réseau de sous-système multimédia IP (IMS) et desservant un utilisateur (20) du réseau de télécommunication,
dans lequel le système comprend le réseau de télécommunication (100) et une pluralité de noeuds de serveur d'application (120) pour fournir une fonctionnalité de serveur d'application IMS, dans lequel le réseau de télécommunication (100) comprend au moins un noeud de fonction de commande (150) pour fournir une fonctionnalité de fonction de commande IMS, dans lequel la pluralité de noeuds de serveur d'application (120) comprennent au moins un premier noeud de serveur d'application (121) et un second noeud de serveur d'application (122),
dans lequel le système est configuré de sorte que :
- un message de demande de surveillance (129) soit transmis, par le premier noeud serveur d'application (121), audit au moins un noeud de fonction de commande (150), le message de demande de surveillance (129) comprenant des informations d'adresse relatives à la fonctionnalité de serveur d'application IMS fournie par la pluralité de noeuds de serveur d'application (120),
un message de réponse de surveillance (159) soit transmis par ledit au moins un noeud de fonction de commande (150) à un noeud de réseau de destination préféré de la pluralité de noeuds de serveur d'application (120) pour fournir la fonctionnalité de serveur d'application IMS, le noeud de réseau de destination préféré étant déterminé par ledit au moins un noeud de fonction de commande (150),
dans lequel le noeud de réseau de destination préféré correspond au premier noeud serveur d'application (121) ou au second noeud serveur d'application (122) selon que le premier noeud serveur d'application (121) ou le second noeud serveur d'application (122) est préféré, par ledit au moins un noeud de fonction de commande (150), parmi la pluralité de noeuds de serveur d'application (120) concernant la fonctionnalité de serveur d'application IMS.

12. Système selon la revendication 11, dans lequel un processus d'enregistrement relatif à l'utilisateur (20) implique la transmission de premières données de profil d'enregistrement, relatives à l'utilisateur (20), à partir dudit au moins un noeud de fonction de commande (150) au premier noeud de serveur d'application (121), dans lequel le système est configuré de sorte que :
- des données de profil d'enregistrement initiales ou mises à jour soient reçues, par le premier noeud de serveur d'application (121), à partir dudit au moins un noeud de fonction de commande (150),
- dans le cas où le message de réponse de surveillance (159) a été transmis au premier noeud serveur d'application (121), les premières données de profil d'enregistrement soient considérées comme appropriées, et dans le cas où le message de réponse de surveillance (159) n'a pas été transmis au premier noeud de serveur d'application (121), de secondes données de profil d'enregistrement, relatives à l'utilisateur (20), soient demandées, par le premier noeud de serveur d'application (121), à partir dudit au moins un noeud de fonction de commande (150), les secondes données de profil d'enregistrement correspondant aux données de profil d'enregistrement mises à jour relatives à l'utilisateur (20), dans lequel, de préférence, la transmission des secondes données de profil d'enregistrement est demandée, par le premier noeud serveur d'application (121), seulement après avoir reçu une information indiquant qu'une session de communication est demandée et/ou initiée par l'utilisateur (20).

13. Programme comprenant un code de programme lisible par ordinateur qui, lorsqu'il est exécuté en partie sur une pluralité de noeuds de serveur d'application (120) et en partie sur un noeud de fonction de commande (150) d'un réseau de télécommunication (100), amène la pluralité de noeuds de serveur d'application (120) et le noeud de fonction de commande (150) à exécuter un procédé selon l'une des revendications 1 à 8.

14. Support lisible par ordinateur pour une surveillance et/ou synchronisation améliorées entre des noeuds de réseau d'un réseau de télécommunication réalisant un réseau de sous-système multimédia IP, le support lisible par ordinateur comprenant un programme informatique, le programme informatique comprenant un code programme qui, lorsqu'il est exécuté en partie sur une pluralité de noeuds de serveur d'application (120) et en partie sur un noeud de fonction de commande (150) d'un réseau de télécommunication (100), amène la pluralité de noeuds de serveur d'application (120) et le noeud de fonction de commande (150) à exécuter un procédé selon l'une des revendications 1 à 8.
